# EUROPEAN PATENT APPLICATION

(11) **EP 1 961 467 A1**
(43) Date of publication of application: **27.08.2008**
(21) Application number: 06717224.7
(22) Date of filing: 06.02.2006
(51) Int. Cl.: A63F 13/12, G06Q 50/00

(54) **METHOD FOR PLAYING A CARD GAME, IN PARTICULAR BLACK JACK (VARIANTS) AND GAMING EQUIPMENT FOR PLAYING SAID GAME**

(30) Priority: 15.12.2005 UA 2005012073
(71) Applicant: Kyrychenko, Olexandr Ivanovich, Zaporozhie, 69035 (UA)
(72) Inventor: Kyrychenko, Olexandr Ivanovich, Zaporozhie, 69035 (UA)
(74) Representative: Swindell & Pearson
(86) International application number: PCT/UA2006/000005
(87) International publication number: WO 2007/070019

(57) **Abstract**

The invention discloses methods and equipment for playing card games, in particular the game of Black Jack, incorporating common cards for players and simultaneous players' decision making. Gaming equipment contains parallel transmission information unit for simultaneous transmission of information to the players about value of card drawn by the dealer in initial and/or subsequent deal , and also contains collective command formation unit for formation of collective command of the players to the dealer. Technical result is as follows: increased dynamics of the game due to reducing time required to perform a round of play, fewer cards required per round of play, combining games played by different rules in the same round of play, more players participating in a round of play. In its extreme variant the game of Black Jack runs as if a single player plays against the dealer regardless of the number of players at the table(s), interference of other players' decisions on the outcome of the game for a player being completely excluded.

## Description

The invention relates to methods of playing card games and gaming equipment for actualization of games of chance such as Black Jack. Variations of Black Jack realization of which is provided by the claimed gaming equipment can be chosen in gaming houses in accordance with the players' wish and/or decision of the management of the house.

Method of playing card game is known, in particular the game of Black Jack, (see German patent No.4439502 dated 8 November 1994, published 14 September 1995, Intern'l class A63F 9/00, A63F 1/00) which consists in that before the beginning of the game the dealer shuffles playing cards and places them in the card shoe face down, each player makes compulsory bet for the game of Black Jack, the dealer draws cards from the card shoe and deals them to the players and also draws two cards for himself, the first of which the dealer places on the table face up and the second one face down, values of the cards dealt to the players are added up, players make decisions about their subsequent deals in the game - additional card or stand, after that the dealer stands or draws more cards for himself in accordance with the rules of Black Jack, the values of the dealer's cards are totalled, the dealer plays with each player in turn by comparing each player's hand total with the dealer's hand total, if a player's hand total is higher than the dealer's hand total the player is paid his win in accordance with the rules of Black Jack, if a player's hand total is lower than the dealer's hand total the player's bet goes to the bank, if a player draws with the dealer, the player keeps his bet.

When the game is performed in accordance with the known method, which is traditional, each player places his bet using jettons. Starting on the left and continuing clockwise the dealer deals a card at to each player and draws one card for himself. In the same manner the dealer deals a second card to each player and draws second card for himself and places it on the table face down. Having received two cards each, players can the double down, order more cards or, in case of having two cards of the same value, split the hand in two and place the same bet on the second hand and double the bet(s) if desired. Players can also make insurance bets. Insurance bet equals half of the initial bet of the player and players may choose to do so in order to insure themselves against the dealer's Black Jack if the first card in dealer's hand is an ace. If the dealer wins, that is if the dealer obtains Black Jack, the player wins double the insurance bet. If the dealer does not obtain Black Jack, the player looses his insurance bet, but plays the game on his initial bet as usual. The dealer plays with each player in turn, which means that the next player can request more cards only after the previous one decided to stand or drew the total of over 21 - bust.

The known method of card game is not dynamic enough, each round lasts long, which makes the game less exciting.

This is due to the fact that a round of game takes a lot of time. The dealer deals one playing card to each player in turn from left to right, draws one card for himself, then the dealer deals one more card to each player in turn and draws second card for himself. Then the dealer draws more cards in turn for each player who orders more cards. This requires plenty of cards and time. Usually there are more than one deck of cards in the game and they need to be shuffled frequently. Shuffling is a lengthy process and also takes time. While the cards are being dealt and shuffled players are idle, which reduces their interest in the game. When the dealer is playing game with one of the players the rest of the players are idle too. Transferring jettons between the players and the dealer's bank during and after every round of play depending on the outcome of the game takes time as well.

The closest to the claimed invention in terms of technical substance and achievable technical result is the method of playing card games, in particular the game of Black Jack (see USA patent No.5154429 dated February 24 1992, published October 13 1992, Intern'I class A63F 1/100, A63F 3/100), which consists in that before the beginning of the game the dealer shuffles playing cards and places them in the card shoe face down, each player makes compulsory bet for the game of Black Jack, the dealer draws cards from the card shoe and deals them to the players and draws cards for himself, players make decisions about their subsequent deals in accordance with the rules of Black Jack - stand, order additional card, double down or split, until no player can order more cards,- values of each player's cards are totalled in accordance with the rules of Black Jack, the dealer stands or draws more cards for himself in accordance with the rules of Black Jack, values of the dealer's cards are totalled, the dealer plays with each player by comparing each player's hand total with the dealer's hand total , if a player's hand total is higher than the dealer's hand total the player is paid his win in accordance with the rules of Black Jack, if a player's hand total is lower than the dealer's hand total the player's bet goes to the bank, if a player draws with the dealer the player keeps his bet.

When the game is performed in accordance with the known method each player may choose to make an additional bet on the second hand of the dealer. After the dealer completed the game on his first hand by comparing the hand total of each player with the dealer's first hand total and finished pay-offs, the dealer draws second hand for himself. Here the dealer uses the first card of his first hand, the said first card was placed on the table face up, as the first one in the second hand, and draws more cards in accordance with the game rules. Next the dealer plays with each player, who made additional bets, by comparing each player's one and only hand with the dealer's second hand. Then the dealer carries out pay-offs on the second bets of the players as set in the game rules. The dealer can draw more than two hands for himself, every time using the same first card which was placed on the table face up.

The known method of card game is not dynamic enough, each round lasts long, which makes the game less exciting.

This is due to the fact that a round of game takes long time. The dealer deals one playing card to each player in turn from left to right, draws one card for himself, then the dealer deals a second card to each player in turn and draws second card for himself. Then each player makes decision about the next step in the game and the dealer draws cards for the first player on his left who requires cards. After finishing with the first player the dealer must draw cards for the next player who requires more cards. The game continues in this manner until the dealer finished with all of the players at the table. This requires plenty of cards and long time. Each player at the table (usually seven players at a table) is dealt at least two cards, there are more than one deck of cards in use on the table and they need to be shuffled frequently. It takes time as shuffling is a lengthy process. While the cards are being dealt and shuffled the players are idle, which reduces their interest in the game. Also when the dealer is playing game with one of the players the rest of the players at the table are idle too.

The aim of the claimed invention is to improve the card game process, in particular the game of Black Jack, where introduction of new operations and new sequence of performing operations provides more dynamics to the game by reducing amount of time needed per round of play, reducing the number of cards required per round of play, increasing the number of players participating in a round of play and also by combining variety of games of different rules in one round of play. This makes the game more attractive for both the players and the gaming house.

### VARIANT 1

In variant 1 the task set is solved by that method of performing a card game, in particular the game of Black Jack, in which the dealer shuffles cards and places them in the card shoe face down, each of the players at the gaming table makes compulsory bet for the game of Black Jack, the dealer draws cards from the card shoe and deals them to the players and draws cards for himself, each player makes decision about subsequent deal in accordance with the rules of Black Jack - stand, order more cards, double down or split, until no player is entitled to obtain more cards, the values of the first two and all of the following cards for each player are totalled in accordance with the rules of Black Jack, the dealer stands or draws more cards for himself in accordance with the rules of Black Jack, the values of the cards obtained by the dealer are totalled, the dealer plays with each player in turn by comparing the dealer's hand with the hand of each player, if a player's hand total is higher than the dealer's hand total the player wins in accordance with the rules of Black Jack, if a player's hand total is lower than the dealer's hand total the player's bet goes to the bank, if a player's hand draws with the dealer's hand the player keeps his bet, according to the claimed invention excels in that in subsequent deal all players simultaneously make their decisions to stand, order additional card, double down or split in accordance with the rules of Black Jack , when all the players who, in accordance with the rules of Black Jack, are entitled to choose whether to stand, order an additional card, double down or split made their decisions and if at least one player decided to request additional card, double down or split, the dealer draws a card from the card shoe which is common (the same) for all players who's decisions require additional card, the values of the first two cards obtained by each player and every following card drawn from the card shoe as ordered by each player are totalled in accordance with the rules of Black Jack.

Causal connection between the aggregate of the technical features of the claimed invention in the variant 1 and achievable technical result is as follows.

When performed in accordance with the claimed method the card game becomes more dynamic and duration of a round of play is shorter. This is due to the fact that after the dealer performed initial deal to all players and dealt two cards to himself in succession, those players, who in accordance with Black Jack rules are entitled to obtain additional card, simultaneously make their decisions about subsequent deal in the game. When all players, who in accordance with Black Jack rules can choose whether to stand, order additional card, double down or split, made their decisions and if at least one player decided to request additional card, double down or split, the dealer draws a card from the card shoe, the said card is common for all said players, that is the dealer performs parallel deal. Every following card drawn by the dealer from the card shoe will be also common for all players who in accordance with the rules of Black Jack are entitled to obtain additional card, thus parallel card dealing is performed. For all of the players, whose decisions require another card to be dealt, the same value is added to their respective initial deal cards obtained at the beginning of the game, which simplifies calculations. Duration of a round of play includes time spent on dealing cards to the players and the dealer, players making decisions about their subsequent deals in the game and calculating hand totals, thus it is obvious that the game becomes faster when performed in accordance with the claimed method. The claimed method of the game requires fewer cards per round of play, which means that cards do not need to be shuffled as often and fewer breaks are required between rounds of play. Also successive-parallel distribution of cards reduces mutual impact of decisions of the players on an individual player's outcome in the game, which is important for players.

### VARIANT 2

In variant 2 the task set is solved by that method of performing card game, in particular the game of Black Jack, in which the dealer shuffles cards and places them in the card shoe face down, each of the players at the gaming table makes compulsory bet for the game of Black Jack, the dealer draws from the card shoe and deals cards to the players and draws cards for himself, each player makes decision about subsequent deal in accordance with the rules of Black Jack - stand, request more cards, double down or split, until no player can order more cards, the values of the first two and all of the following cards for each player are totalled in accordance with the rules of Black Jack, the dealer stands or draws more cards for himself in accordance with the rules of Black Jack, the values of the cards obtained by the dealer are totalled, the dealer plays with each player in turn by comparing the dealer's hand with the hand of each player, if a player's hand total is higher than the dealer's hand total the player wins in accordance with the rules of Black Jack, if a player's hand total is lower than the dealer's hand total the player's bet goes to the bank, if a player's hand draws with the dealer's hand the player keeps his bet, according to the claimed invention excels in that in the initial deal the first and the third cards, drawn by the dealer from the card shoe after players made their bets, are common for all players at the gaming table, their values are totalled and the resulting sum is the same for all players, players make their decisions regarding their subsequent deals in turn, the dealer draws cards from the card shoe individually for each player who's decision requires additional card, for each player the values of the said first and third cards and every following card, obtained by the player are totalled in accordance with the rules of Black Jack.

Causal connection between the aggregate of the technical features of the claimed invention in the variant 2 and the achievable technical result is in the following.

When performed in accordance with the claimed method the game becomes more dynamic and duration of a round of play is shorter. It is explained by the fact that after the dealer shuffled cards and the players made their compulsory bets the dealer performs initial deal as parallel deal, that is the dealer draws cards from the card shoe, of which the first and the third ones are common for all players, and places the said cards on the table face up. Dealing the said cards takes little time. The total of the said cards is the same for each player. Having received the said two cards, players make their decisions about their subsequent deals in turn. The game then continues in traditional manner. The dealer performs successive card dealing, that is the dealer draws cards from the card shoe individually for each player whose decision requires more cards in accordance with the game rules. For each player the values of the first and the third cards and the values of the following cards obtained are totalled in accordance with the rules of Black Jack. Duration of a round of play includes time spent on card dealing to the players and the dealer, players making decisions about their subsequent steps in the game and calculating hand totals, thus it is obvious that the game becomes faster when performed by the claimed method. When the game is conducted in accordance with the claimed method fewer cards are required per round of play, which means that the cards do not need to be shuffled as often and fewer breaks are required between rounds of play.

Variant 3

In variant 3 the task set is solved by that method of performing a card game, in particular the game of Black Jack, in which the dealer shuffles cards and places them in the card shoe face down, each of the players at the gaming table places compulsory bet for the game of Black Jack, the dealer draws from the card shoe and deals cards to players and draws cards for himself, each player makes decision about his subsequent deal in the game in accordance with the rules of Black Jack - stand, order more cards, double down or split, until no player is entitled to obtain more cards, the values of the first two and all of the following cards for each player are added up in accordance with the rules of Black Jack, the dealer stands or draws more cards for himself in accordance with the rules of Black Jack, the values of the cards obtained by the dealer are totalled, the dealer plays with each player in turn by comparing the dealer's hand with the hand of each player, if a player's hand total is higher than the dealer's hand total the player wins in accordance with the rules of Black Jack, if a player's hand total is lower than the dealer's hand total the player's bet goes to the bank, if a player's hand draws with the dealer's hand the player keeps his bet, according to the claimed invention excels in that in the initial deal the first and the third cards, drawn by the dealer from the card shoe after the players placed their bets, are common for all the players, the values of the said cards are totalled and the resulting sum is the same for all players, in subsequent deal all players, who are entitled to obtain additional card in accordance with the rules of Black Jack simultaneously make their decisions to order additional card, double down or split in accordance with the rules of Black Jack, the dealer draws a card from the card shoe, the said card is common for all players, for each player the values of the said first and third cards and the values of all the following cards obtained by the player are added up in accordance with the rules of Black Jack.

It excels also in that every following card drawn by the dealer from the card shoe after all players made their decisions about their subsequent deals in the game is common for all the players, who decided to order additional card, double down or split, and for the players, who decided to stand, each following card becomes the dealer's hand card if the total value of the dealer's hand before the said card is drawn does not exceed 17.

It also **excels** in that players can make additional bets on the game of Baccarat, which is played on the first two cards obtained by the players and the first two cards obtained by the dealer, if the rules of Baccarat require a third card to be dealt to the players or a third card to the dealer- it will the fifth card drawn by the dealer from the card shoe, if the rules of Baccarat require a third card to be dealt to the players and a third card to be dealt to the dealer- it will be correspondingly the fifth and the sixth cards drawn by the dealer from the card shoe.

It also excels in that time available for the players' decision making is limited.

Causal connection between the aggregate of the technical features of the claimed invention in the variant 3 and achievable technical result is in the following.

When conducted in accordance with the claimed method the game becomes dynamic and a round of play takes very little time. It is explained by the fact that after the dealer shuffled the cards and the players made their compulsory and additional bets the dealer performs initial deal as parallel deal, that is the dealer draws cards from the card shoe, of which the first and the second ones are common for all players. The dealer then performs subsequent deal as parallel deal, all players simultaneously make their decisions about their subsequent deals in the game. Duration of a round of play includes time spent on dealing cards to the players and to the dealer, players making decisions about their subsequent steps in the game and calculating hand totals, thus it is obvious that the game becomes faster when performed by the claimed method. Duration of a round of play becomes practically unaffected by the number of participating players, which removes the limit to the number of players participating in the game. The latter is important for the house, as it allows to deliver the game with fewer personnel involved and increased number of bets per round of play can boost the income of the house. When the game is performed in accordance with the claimed method fewer cards are required per round of play, which means that cards do not need to be shuffled as frequently and fewer breaks are required between rounds of play. Also slowly declining sequence of cards in the card shoe makes card counting and thus taking advantage of the house less effective. The players benefit from the fact that faster game run allows them to play more rounds, which means that with the right strategy of placing bets probability of win increases.

The dynamics of the game also benefits from the fact that every following card drawn by the dealer from the card shoe after all players made their decisions about their next step in the game is common for all players, who decided to order additional card, double down or split, and for the players who decided to stand the following card becomes the card in subsequent deal to the dealer's hand if the total of the dealer's hand does not exceed 17. When the game is performed in accordance with the claimed method, there is no mutual impact of individual decisions of the players on their respective outcomes in the game. This allows to attract those players who favour one-to-one game with a dealer or the players who prefer the last place at the table.

The dynamics of the game also increases when Black Jack is combined with Baccarat in that the players can make additional bets. Baccarat is played on the first two cards dealt to the players and the first two cards dealt to the dealer, if the rules of Baccarat require a third card to be dealt to the players and a third card to be dealt to the dealer- it will be correspondingly the fifth and the sixth cards drawn by the dealer from the card shoe.

The game of Baccarat is performed in the following manner. According to the traditional rules participants in the game place bets either on the house's win or on the player's win or on tie. Two hands of cards are dealt from the card shoe, two cards each. After that a third card may be required for either of the hands. The first hand is for those who bet on the player's win, the second hand for those betting on the house win. The winning hand is the one that has value closest to 9. Tens, cards with the total value of 10 are counted as zeroes. If a resulting hand's total is a double-digit number then the last digit is the value of the hand in the game. Four cards are drawn from the card shoe in turn: the first card goes to players, the second card - to the dealer, the third card - to players, the fourth card to the dealer. If a third card is required to either of the hands, the said card is drawn from the card shoe. The game rules determine how the cards are dealt. The same amount of win is paid whether for the bet on the house's win or for the bet on the player's win. The house retains 5% of commission from the wins obtained by players from betting on the house's win. It is possible to bet on draw between the house and the player. Such bet would give win 8:1.

Traditionally considered the most aristocratic of all games of chance Baccarat is easy for the players, but difficult and expensive for casinos. The table is usually supervised by up to three members of personnel regardless of the number of participating players. The bets are usually high, so credit managers and security personnel must be nearby at all times. Obviously combining two of the most popular games Black Jack and Baccarat makes the game more exciting and increases the players' satisfaction as well as is conducive to reduction of the house's expenses and boosts the income.

Limiting the time available for decision making by the players allows to improve the dynamics of the game. The said time limit can be set at discretion of the house, say 60 seconds. If a player is too slow in making decision about his bet and can't make it within the set time limit, the round would be played without the player, and/or if a player is too slow in making decision in the game process and can't make it within the set limit of time, it would be treated as if the player decided to stand.

In any of the variants of the game of Black Jack the dealer can draw second card for himself after he finished initial deal to the players and place it on the table face down as dictated by the game rules in the majority of US houses. The dealer can also draw second card for himself after all players lost their right to obtain more cards in accordance with the rules of Black Jack in majority of UK houses.

A feature of Black Jack is that after receiving their first two cards the players can make different decisions about their next steps in the game - some may choose to stand, others decide to order additional card, double down or split, which means that it is impossible to perform the game with live dealer and real cards and dealing common cards to players using traditional equipment for Black Jack. Such game can be implemented by using equipment in which real cards are drawn from the card shoe and placed on the table, the values of the drawn cards are recognised, information about cards' values is transmitted to the electronic data processing unit, where images of virtual cards are formed and information about the said virtual cards is transmitted simultaneously to the players as required..

Gaming equipment is known for card game, in particular the game of Black Jack, (Ukraine patent No.72328, dated 26 November 2002, published 15 February 2005, Intern'I class A63F 1/100, A63F 1/18; Application PCT No.2004/049229 dated 11 February 2003, published 10 June 2004, Intern'l class G06F 17/60, //161.00, A63F 1/18) comprising
- gaming table with cloth provided with markings, designating players' sectors, the dealer's sector and areas for placing cards face up,
- card shoe for storing and dealing cards drawn from it face down, equipped with optical electronic sensor for detecting card movement and also with card location (on the table) and imprint value recognition and registration unit, cards are drawn from the card shoe,
- monitoring system of the game run,
- information storage system,
- computer, connected with separate functional units by wire or wireless communications, supplied with programmed in accordance with the game rules electronic data processing system, the said electronic data processing system allows to evaluate signals coming from the card location (on the table) and registration unit (playing cards are drawn from the card shoe face down) and from the monitoring system of the game run,
- computer processed data visualisation device,
- card imprint value comparison unit.

Card imprint value recognition and registration unit, the said cards are drawn from the card shoe face down, allows to determine card value both in the process of a card being drawn from the card shoe and when the said card is placed on the table face down as soon as the card is drawn from the card shoe. Monitoring system of the game run is implemented as optical electronic device which processes images of the objects on the gaming table, the said monitoring system of the game run contains:
- card imprint value recognition and registration unit, the said cards come to the table to be placed in designated areas,
- players' bets recognition and registration unit,
- dealers bank recognition and registration unit,
- monitoring system of the game run control unit.

Optical electronic device which processes images of the objects on the gaming table is positioned over the gaming table. The gaming table is supplied with sectors for placing bets and other areas for placing jettons.

The known gaming equipment has limited functional capabilities, so the game run is not dynamic enough as a round of game takes long time which diminishes players' interest in the game.

It is explained by the fact that when the known gaming equipment is used the game can be conducted only with the use of jettons. Calculating wins and losses and transferring jettons between the players and the dealer's bank takes a lot of time. The known gaming equipment allows to determine card imprint value when the card is drawn from the card shoe face down, when the card is placed on the table face up and when the obtained results of determining card imprint value are compared. It eliminates possibility of transmitting corrupt information to the electronic system. However, the known gaming equipment merely controls the game run. Images of virtual cards are created only on the display of the data visualization device, so with use of the known equipment only the game with successive card dealing is possible, which results in the game being not dynamic enough.

The closest to the claimed invention in terms of technical substance and achievable technical result is the method of playing card games, in particular the game of Black Jack (see Ukraine patent No.74268, dated 23 Desember 2003, published 15 February 2005, Intern'I class A63F 1/100, A63F 1/18; Application PCT No.WO2005/062228 dated 16 April 2004, published 7 July 2005, Intern'I class G06F 17/60, A63F 9/00, G06F 161/00) including
- gaming table with cloth provided with markings designating players' sectors and the dealer's sector as well as areas for placing gaming cards face up,
- card shoe for storing and dealing cards drawn from it face down, equipped with optical electronic detector of playing cards' movement and also with playing card imprint value recognition and registration unit, the said cards are drawn from the card shoe,
- monitoring system of the game run equipped with: objects' presence on the table recognition system; player's bet control units supplied with zones for entering operating commands and zone for displaying information about the game run, the said player's bet control units are positioned in each player's sector; game control units supplied with zones for entering operating commands and zone for displaying information about the game run, the said game control units are positioned in each player's sector,
- credit control unit supplied with zones for entering operating commands, the said credit control unit is positioned in the dealer's sector,
- players' operating commands visualization unit supplied with zones for entering operating commands and zone for displaying information about the game run, the said players' operating commands visualization unit is positioned in the dealer's sector,
- computer, connected with separate functional units by wire or wireless communications, supplied with programmed in accordance with the game rules electronic data processing system,
- computer processed data visualization device,
- information storage system,
- the inputs of the said electronic data processing system are connected correspondingly to the outputs of the card imprint value recognition and registration unit (the said cards are drawn from the card shoe face down), objects' presence on the table recognition unit, computer, player's bet control units, credit control unit,
- the inputs of the said computer are connected correspondingly to the outputs of electronic data processing system, information storage system,
- the inputs of the said player's bet control units are connected correspondingly to the output of electronic data processing system,
- the input of the said credit control unit is connected correspondingly to the output of electronic data processing system,
- the input of the said players' operating commands visualization unit is connected correspondingly to the output of electronic data processing system,
- the input of the said information storage system is connected correspondingly to the output of computer,
- the input of the said computer processed data visualization device is connected correspondingly to the output of computer.

Also the input of the said electronic data processing system is connected correspondingly to the outputs of game control units and the inputs of game control units are connected correspondingly to the output of electronic data processing system.

The known gaming equipment is designed for playing Black Jack where cards are dealt successively to each player, that is a card is dealt in to each player, then the dealer draws a card for himself, then another card is dealt in to each player, the players make their decisions and the dealer plays with each player in turn.

The known gaming equipment has limited functional capacities, the game with use of such equipment is not dynamic enough, as each round of play takes long time it diminishes the players' interest in the game.

The known gaming equipment allows to perform the game without using jettons. All calculations are performed automatically without dealer taking part in them, which makes the game faster. However limited functional capacities do not allow to significantly reduce time required per round of play. It is explained by the fact that the known gaming equipment is designed for playing Black Jack where cards are dealt to each player in succession - first the dealer deals a card to each player who placed a bet, then the dealer draws a card for himself, then the dealer deals a second card to each player in turn, then the dealer draws more cards to each player according to the decision. Information about values of every first card placed face up on the specially designated areas on the table for every individual player goes to the electronic data processing system in succession, the said electronic data processing system then passes this information correspondingly to each player's game control unit. Following that, information about values of every second card placed face up on the specially designated areas on the table for every individual player goes to the electronic data processing system, the said electronic data processing system then passes this information correspondingly to each player's game control unit, and so on until the player loses right to obtain another card. Dealing cards takes time and makes the game less exciting.

Besides, each player in turn communicates his decisions in the game to the dealer, which also makes a round of the game longer.

The aim of the claimed invention is to perfect the gaming equipment for performing card games, in particular the game of Black Jack, by introducing new constructive elements, new connections between the constructive elements and new design of the constructive elements, which would expand functional capacities of the equipment, so that dynamics of the game would increase resulting in shorter time required per round of play, using fewer cards per round of play, accommodating more players per round of play, combining games of different rules in the same round of play and making the game more interesting from both the players' and the house's point of view.

The task set is solved in that gaming equipment for card games, in particular the game of Black Jack, including:
- gaming table with cloth provided with markings designating players' sectors and the dealer's sector as well as areas for placing cards face up,
- card shoe for storing and dealing cards (cards are drawn from the card shoe face down) equipped with optical electronic detector of playing cards' movement and with card imprint value recognition and registration unit (cards are drawn from the card shoe),
- monitoring system of the game run, equipped with: objects' presence on the table recognition unit; player's bet control units supplied with zones for entering operating commands and zone for displaying information about the game run, positioned in each player's sector; game control units supplied with zones for entering operating commands and zone for displaying information about the game run, positioned in each player's sector,
- credit control unit supplied with zones for entering operating commands, positioned in the dealer's sector,
- players' commands visualization unit supplied with zone for entering operating commands and zone for displaying information about the game run, positioned in the dealer's sector,
- computer connected to separate functional units by wire and wireless communications, the said computer is supplied with programmed in accordance with the game rules electronic data processing system,
- computer processed data visualization device,
- information storage system,
- the inputs of the said electronic data processing system are connected correspondingly to the outputs of the card imprint value recognition and registration unit (the said cards are drawn from the card shoe face down), objects' presence on the table recognition unit, computer, player's bet control units, credit control unit,
- the inputs of the said computer are connected correspondingly to the outputs of electronic data processing system, information storage system,
- the inputs of the said player's bet control units are connected correspondingly to the output of electronic data processing system,
- the input of the said credit control unit is connected correspondingly to the output of electronic data processing system,
- the input of the said players' operating commands visualization unit is connected correspondingly to the output of electronic data processing system,
- the input of the said information storage system is connected correspondingly to the output of computer,
- the input of the said computer processed data visualization device is connected correspondingly to the output of computer,
excels in that the gaming equipment additionally contains:
- parallel transmission of information unit, transmitting information about the value of card drawn by the dealer from the card shoe to the game control unit of every player who is entitled to obtain cards,
- collective command formation unit for transmitting joint command of the players to the dealer,
- the input of parallel transmission of information unit is connected correspondingly to the output of electronic data processing system,
- the output of parallel transmission of information unit is connected correspondingly to the inputs of game control unit of each player,
- the input of collective command formation unit is connected correspondingly to the outputs of game control unit of each player,
- the output of collective command formation unit is connected correspondingly to the input of electronic data processing system.

It **excels** also in that player's bet control units and game control units are equipped with timers limiting time available to players for making decisions.

It excels also in that the claimed gaming equipment additionally contains one or more automated satellite gaming tables where each player's sector is equipped with:
- player's bet control unit supplied with zones for entering operating commands and zone for displaying information about the game run,
- game control unit supplied with zones for entering operating commands and zone for displaying information about the game run,
- automated credit control unit supplied with zones for entering operating commands and zone for displaying information about the game run,
- the outputs of the player bet control units, the game control units and automated credit control units installed on the automated satellite tables are connected correspondingly to the inputs of the electronic data processing system, herein the outputs of the game control units are connected to the inputs of the electronic data processing system via collective command formation unit,
- the inputs of the player bet control units, the game control units and automated credit control units are connected correspondingly to the outputs of the electronic data processing system, herein the inputs of the game control units are connected to the outputs of the electronic data processing system via parallel transmission of information unit.

Causal connection between the aggregate of technical features of the claimed invention and achievable technical result is in the following.

Additional introduction in the claimed gaming equipment of collective command formation unit for transmitting collective command of the players to the dealer and connection of the said collective command formation unit to others constructive elements of the gaming equipment allows to form a hand of virtual cards on each player's game control unit in accordance with decisions made by the player in the game and at the same time to count hand total for each player, that is to perform parallel card dealing in such games as Black Jack or similar.

Additional introduction in the claimed gaming equipment of collective command formation unit for transmitting collective command of the players to the dealer and connection of the said collective command formation unit to other constructive elements of the gaming equipment as claimed in the present invention allows all players to make their decisions simultaneously. Regardless of which of the following decisions players made: stand, request another card, double down or split,- the dealer either draws a card from the card shoe if at least one player's decided to carry on or the dealer does not draw a card if all of the players decided to stand. The dealer receives collective command only when all players who have right to carry on with the game made their decisions. When no more players require another card the dealer receives his next command from the electronic data processing system and finishes the game as dictated by Black Jack rules. Obviously the equipment makes the game more dynamic by enabling to perform Black Jack with parallel dealing card dealing, which results in reducing time required per round of play, using fewer cards per round of play, accommodating more players per round of play and combining games of different rules in the same round of play.

Additional introduction in the claimed gaming equipment of timers restricting time available to players for decision making, the said timers are fitted in the bet control units and in the game control units, also facilitates improved dynamics of the game. If a player takes too long to make decision when placing a bet, the round of the game will be performed without the player taking part, and/or if a player takes too long to make decision about his next step in the game, it will be deemed that the player decided to stand.

Additional introduction in the claimed gaming equipment of one or more automated satellite gaming tables equipped in each player's sector with bet control units, game control units and automated credit control units, connected to the electronic data processing system, allows to increase dynamics of the game by accommodating more players participating in the game without engaging additional personnel as additional automated satellite gaming tables do not require dealers, this will significantly boost the house's income.

Hereby, the claimed gaming equipment solves the task - significant increase of the game dynamics.

The card game in accordance with the claimed method, in particular the game of Black Jack, is performed as follows.

Before the game begins the dealer thoroughly shuffles cards and places them in the card shoe face down. The players at the gaming table make their bets. The dealer deals cards to the players and draws cards for himself. Each player makes decision in accordance with the rules of Black Jack - stand, order additional card, double down or split,- until all players lost right to obtain more cards. The values of the first two cards and all additional cards dealt to the players are totalled in accordance with the rules of Black Jack. The dealer stands or deals more cards to himself in accordance with the rules of Black Jack. The values of the cards obtained by the dealer are totalled. The dealer then plays with each player in turn by comparing his hand with hand of each player. If a player's hand total is higher then the dealer's hand total the player obtains his win in accordance with the rules of Black Jack, if a player's hand total is lower than the dealer's hand total the player's bet goes to the bank, if a player's hand total equals the dealer's hand total, the player keeps his bet.

When the game is conducted in accordance with the variant 1 the dealer deals one card to each player in succession, draws a card for himself, then the dealer draws one more card for each player in succession. All players who are entitled to stand, order additional card, double down or split in accordance with the rules of Black Jack, having received two cards each, simultaneously make their decisions and if at least one player decides to order another card, double down or split the dealer draws from the card shoe a card which is common for all players who's decision requires additional card. Every following card drawn by the dealer from the card shoe if ordered by players who are entitled to obtain additional card also becomes common for all those players, hereby the dealer performs parallel card dealing. The values of the first two cards obtained by each player and all following cards ordered by players are totalled in accordance with the rules of Black Jack. Adding the same card values to the players' initial pairs of cards simplifies counting. As the duration of a round of play consists of time required for dealing cards to the players and the dealer, time spent by players on decision making and counting hand totals for each player, it is obvious that the game runs faster if performed in accordance with the claimed method. Also the claimed method allows to deal fewer cards per round of play, so cards need to be shuffled less often and there are fewer breaks between rounds of play. Besides, interference of players' decisions on the outcome of the game of players sitting further down the table is reduced which is important for players too.

When the game is performed in accordance with variant 2 the first and the third card, drawn by the dealer from the card shoe after all the players made their bets and placed face up on the gaming table, are common for all players, that is the dealer performs parallel card dealing. The total value of these initial deal cards is the same for all players. Having received two cards, the players make their decisions in turn. The dealer deals cards individually for each player who decided to order additional card, double down or split. For every player the values of the said first and third cards are totalled with all other cards obtained by the player in accordance with the rules of Black Jack. As the duration of a round of play consists of time required for dealing cards to the players and the dealer, time spent by the players on decision making and counting hand totals for each player, it is obvious that the game runs faster if performed in accordance with the claimed method. Also the claimed method allows to deal fewer cards per round of play, so cards need to be shuffled less often and there are fewer breaks between rounds of play.

When the game is performed in accordance with variant 3 the players at the gaming table in addition to compulsory bet of Black Jack can make an optional bet. When the bets have been placed the dealer begins to perform parallel card dealing. The first and the third cards drawn by the dealer from the card shoe after the players placed their bets are common for all players. The values of the said first and third cards are totalled and the total is the same for all players. All players who have right to obtain another card simultaneously make their decisions in accordance with the rules of Black Jack. When all players, who have right in accordance with the rules of Black Jack to stand, order additional card, double down or split, made their decisions and at least one player decided to order additional card, double down or split, the dealer draws a card from the card shoe which is common for all players who's decision requires another card. Herein every following card drawn by the dealer from the card shoe after the players made their decisions is common for all players who decided to order another card, double down or split, and for the players who decided to stand the said drawn card is the next dealer's card if the dealer's hand total before the said following card is drawn does not exceed 17. For every player the values of the said first and third cards drawn from the card shoe and the values of all following cards ordered are totalled in accordance with the rules of Black Jack.. As the duration of a round of play consists of time required for dealing cards to the players and the dealer, time spent by the players on decision making and counting hand totals for each player, it is obvious that the game runs significantly faster if performed in accordance with the claimed method. Duration of a round of play is not affected by the number of participating players, which removes limit to the number of players who can take part in the game. The latter is important for the house, because it allows to provide games with fewer personnel engaged and also increased number of bets favourably affects the house's income. The claimed method allows to deal fewer cards per round of play, so cards need to be shuffled less often and there are fewer breaks between rounds of play. Also slowly declining number of cards in the card shoe makes card counting for taking advantage of the house less effective. Players benefit from the fact that faster game run allows them to play more rounds, which means that with the right strategy of placing bets probability of win increases. Also performing the game in accordance with claimed method eliminates interference of individual decisions of players on other players' outcomes in the game, which is important for players. It allows to attract those players who prefer to play one-to one with the dealer or favour the last place at the table.

The said optional bet players can make on the game of Baccarat, which is played on the first two cards dealt to the players, that is the first and the third card drawn from the card shoe, and the second and the fourth cards drawn from the card shoe, which are deemed the dealer's cards. If the rules of Baccarat require a third card to the players or a third card to the dealer it will be the fifth card drawn by the dealer from the card shoe, if the rules of Baccarat require a third card to the players and a third card to the dealer it will be correspondingly the fifth and the sixth cards drawn by the dealer from the card shoe.

The game of Baccarat is performed as follows. According to the traditional rules the players make bets either on player's win or on the dealer's win. Two hands of cards are dealt from the card shoe, two cards each hand. The first hand is for the players who put their bets on player's win, the second hand is for the players who bet on the house's win. Winning hand is the one which value is closest to 9. Tens, groups of cards with total value of 10 and cards with pictures are counted as zeroes. If the resulting total is a double-digit number then the last digit is the value of the hand. If a third card is required for either of hands, the said third card is drawn from the card shoe. The game rules determine how the cards are dealt. The same amount of win is paid whether for the bet on the house's win or for the bet on the player's win. The house retains 5% of commission from the wins obtained from betting on the house's win. It is possible to bet on draw between the house and player. Such bet would give win 8:1. Combining two of the most popular card games makes the game more exciting and increases players' satisfaction from the game, facilitates reduction of the house's expenses and accordingly boosts the house's income.

When performing the game of Black Jack in accordance with any variant the dealer can draw second card for himself after he dealt second cards to the players and place the dealer's second card on the table face down as is required in majority of USA's houses. The dealer can draw second card for himself after all players lost right to obtain any more cards as is required in majority of UK's houses.

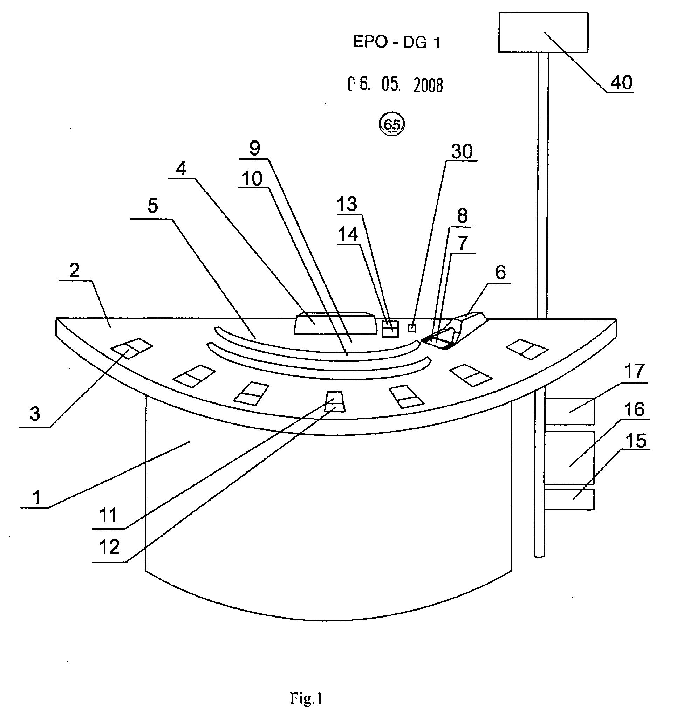

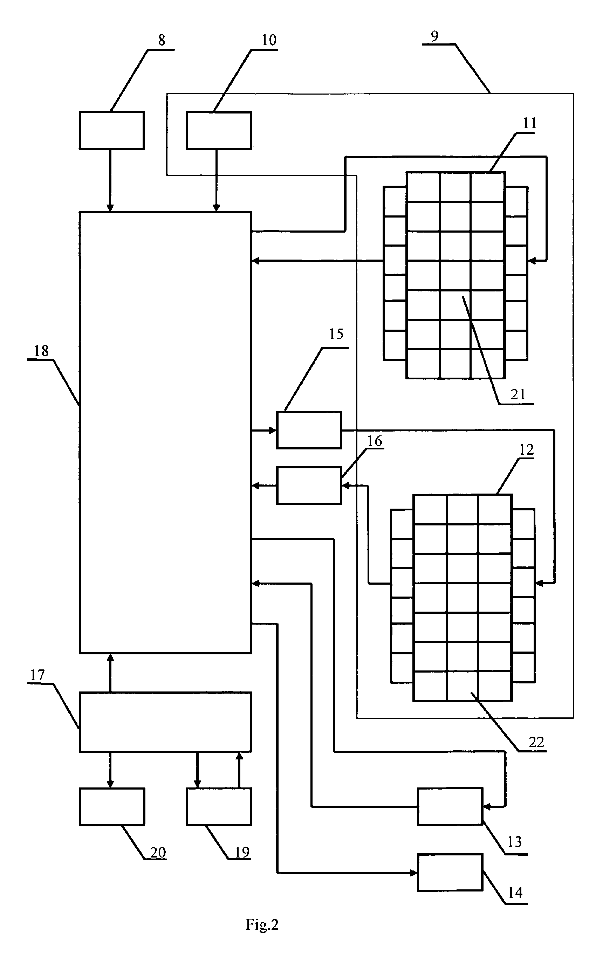

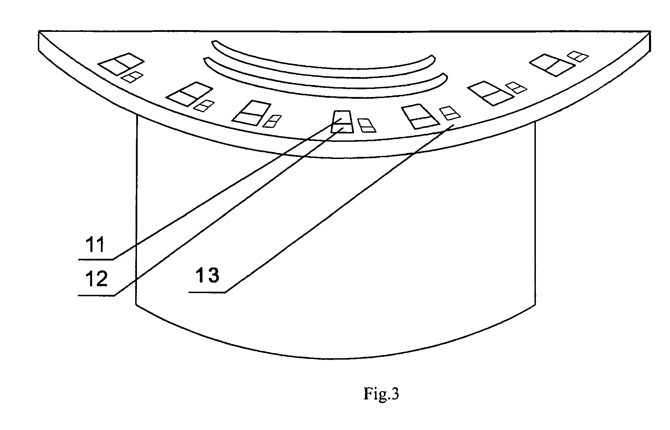

The substance of the invention is explained in the drawings where the general view of the gaming table is shown on fig.1, block-diagram of the gaming equipment is shown on fig.2, additional automated gaming table is shown on fig.3.

Gaming equipment for card games, in particular the game of Black Jack, contains:
- gaming table 1 with cloth 2 provided with markings designating players' sectors 3 and dealer's sector 4 as well as areas 5 for placing cards face up,
- card shoe 6 for storing and distribution of playing cards (cards are drawn from the card shoe face down) equipped with optical electronic detector of playing cards' movement 7 and with card imprint value recognition and registration unit 8 (cards are drawn from the card shoe 6),
- monitoring system of the game run 9 supplied with objects' presence on the table recognition system 10, player's bet control units 11 positioned in each of the seven player's sectors 3 and containing zones for entering operating commands and zone for displaying information about the game run, game control units 12 positioned in each of the seven player's sectors 3 and containing zones for entering operating commands and zone for displaying information about the game run,
- credit control unit 13 positioned in the dealer's sector 4 and containing zones for entering operating commands and zone for displaying information about the game run,
- players' operating commands visualization unit 14 positioned in the dealer's sector 4 and containing zones for entering operating commands and zone for displaying information about the game run
- parallel information transmission unit 15 transmitting information about value of card drawn by the dealer from the card shoe 6 to the game control units 12 of every player who has right to obtain cards,
- collective command formation unit 16 for transmitting joint command of the players to the dealer,
- computer 17 connected to separate functional units by wire and wireless communications and supplied with programmed in accordance with the game rules electronic data processing system 18,
- information storage system 19,
- computer processed data visualization device 20, the data are processed by computer 17 and characterize the game run.

Player's bet control units 12 are provided with timers 21 restricting time available to the players for decision making.

The inputs of the data processing system 18 are connected correspondingly to the outputs of card imprint value recognition and registration unit 8 (cards are drawn from the card shoe 6 face down), objects' presence on the table recognition unit 10, computer 17, player's bet control units 11, credit control unit 13,
the inputs of the computer 17 are connected correspondingly to the outputs of electronic data processing system 18, information storage system 19,
the inputs of the player's bet control units 11 are connected correspondingly to the output of the electronic data processing system 18,
the input of the credit control unit 13 is connected correspondingly to the output of electronic data processing system 18,
the input of players' operating commands visualization unit 14 is connected correspondingly to the output of electronic data processing system 18,
the input of information storage system 19 is connected correspondingly to the output of the computer 17,
the input of computer processed data visualization device 20 is connected correspondingly to the output of the computer 17,
the input of parallel information transmission unit 15 transmitting information about value of card drawn by the dealer from the card shoe 6 to the game control unit 12 of each player who is entitled to obtain the card is connected correspondingly to the output of electronic data processing system 18,
the output of parallel information transmission unit 15 transmitting information about the value of card drawn by the dealer from the card shoe 6 to the game control unit 12 of each player who is entitled to obtain the card is connected correspondingly to the inputs of each player's game control unit 12,
the input of collective command formation unit 16 transmitting joint command of players to the dealer is connected correspondingly to the outputs of each player's game control unit,
the output of collective command formation unit 16 transmitting joint command of the players to the dealer is connected correspondingly to the output of electronic data processing system 18.

If one or more automated satellite tables are installed then each player's sector 3 is equipped with
- player's bet control unit 11 containing zones for entering operating commands and zone for displaying information about the game run,
- game control unit 12 containing zones for entering operating commands and zone for displaying information about the game run.
Also
- the outputs of player's bet control units 11 installed on the automated satellite table(s) , the outputs of game control units 12 installed on the automated satellite table(s) and the outputs of the automated credit control units 13 are connected correspondingly to the inputs of electronic data processing system 18, herein the outputs of the game control units 12 are connected to the inputs of the electronic data processing system 18 via the collective command formation unit 16,
- the inputs of the said player's bet control units 11, the inputs of the said game control units 12 and the inputs of the automated credit control units 13 are connected correspondingly to the outputs of the electronic data processing system 18, herein the inputs of the game control units 12 are connected to the outputs of the electronic data processing system 18 via the parallel transmission of information unit 15.

Card imprint value recognition and registration unit 8 can be implemented in such way as to provide possibility of recognition and registration of imprint value of the cards lying on the gaming table 1 face down and/or face up as well as position of the cards on the gaming table 1.

Player's bet control units 11 can be implemented in the form of sensory displays containing touch sensitive panel and/or liquid-crystalline active colour matrix. Touch sensitive panels of each player's bet control unit 11 can be provided with the following zones for entering operating commands: "buy credit", "sell credit" and "bet",- as well as contain numerical pad and numerical indicator of players' places, whereas liquid-crystalline active colour matrix of each of the player's bet control unit 11 is provided with zones for displaying information about the game run. Game control units 12 can be implemented in the form of sensory displays containing touch sensitive panel and/or liquid crystalline active colour matrix. Liquid crystalline active colour matrixes of the game control units 12 are provided with zone for displaying information about the game run. Touch sensitive panels of the game control units 12 can be provided with the following zones for entering operating commands: "additional card", "split", "increase bet", "insurance (yes, no)", "stand". Credit control unit 13 can be implemented in the form of sensory display containing touch sensitive panel and/or liquid crystalline active colour matrix. Touch sensitive panel of the credit control unit 13 is provided with zone for entering operating commands, the said zone contains numerical indicator of players' places. Opposite each player's number on the liquid crystalline colour active matrix the following zones for displaying information about the game run can be provided: "credit" zone divided in three parts - the first one is "credit value", the second one is "buy credit" the third one is "sell credit", and "bet" zone. The touch sensitive panel of the credit control unit 13 can also contain zone for entering operating commands, the said zone implemented in the form of numerical board. Players' commands visualization unit 14 can be realized in the form of sensory display containing touch sensitive panel and/or liquid crystalline active colour matrix. Touch sensitive panel of the players' commands visualization unit 14 contains zone for entering operating commands, the said zone contains numerical indicator of players' places. Opposite each player's number on the liquid crystalline matrix zones for displaying information about the game run are situated. Card imprint value recognition and registration unit 8, cards are drawn from the card shoe 6 face down, is realized in the form of optical electronic device containing voltage CCD-converter, lens and processor connected in series, the said card imprint value recognition and registration unit allows to determine a card value in the process of drawing the card from the card shoe 6 as well as when the card is placed on the gaming table face up as soon as the card left the card shoe 6. Objects' presence on the table recognition unit 10 can be realized as optical electronic device for processing images of objects on the table 1 containing imprint value recognition and registration unit of cards coming to areas 5 for placing cards face up and determining position of the said cards on the gaming table 1. Parallel information transmission unit 15 transmitting information about the value of card drawn by the dealer from the card shoe 6 to the game control units 12 of every player who is entitled to obtain the card is realized as logical digital finite automaton which, if a dealt card is classified by the electronic data processing system as common for all players, simultaneously transmits information to the game control unit 12 of all players who have right to obtain the said card. Collective command formation unit 16 for transmitting joint command of the players to the dealer is realized as logical digital finite automaton which receives information about every player's decision from corresponding game control units 12 - to continue the game or to stand,- and, as soon as the last player makes decision, forms and sends resulting command to the players' commands visualization unit 14 : draw another card if at least one player decided to continue the game or do not draw another card if all players decided to stand.

Gaming equipment for card games in particular the game of Black Jack operates as follows.

Before the game begins the dealer thoroughly shuffles cards, preferably using a device designed for this purpose, the dealer then places the cards face down in the card shoe 6. Each of the players at the gaming table buys credit using player's bet control unit 11, the said player's bet control units are positioned in each player's sector 3. A player touches zone for entering operating command "buy credit" and passes money or jettons over to the dealer. On the credit control unit 13 the second part "buy" of the credit zone and numerical board become activated. The dealer enters the credit value using numerical board of the credit control unit 13 and sends it to the electronic data processing system 18 by touching corresponding zone of the numerical indicator of players' places. Zones for displaying information about the game run of the player's bet control units 11 display information about credit value of each player accordingly and numerical boards and numerical indicators of players sectors become activated. Every player enters his bet value for the current game by using numerical board of the player's bet control unit and touches zone "bet". Electronic data processing system 18 reduces credit value of each player according to the bet value entered by the player. From the electronic data processing system 18 information about bets entered is transmitted to the dealer by appearing in the first part "credit value" of the zone "credit" for displaying information about the game run and in the zone "bet" of the credit control unit 13. The dealer then deals cards to the players and himself in accordance with the game rules (according to the variant of the game of "Black Jack" performed). When the edge of a card crosses working zone of the optical electronic detector of playing cards' movement 7 the said detector activates card imprint value recognition and registration unit 8 (the card is drawn from the card shoe face down). Information about imprint value of every card which comes to the area 5 for placing cards face up on the gaming table 1 goes to the electronic data processing system 18 of the computer 17 and then via parallel information transmission unit transmitting information about value of card drawn by the dealer from the card shoe 6 to the game control unit 12 of every player who is entitled to obtain cards. Electronic data processing system 18 also obtains information from the objects' presence on the table recognition unit 10 of the monitoring system of the game run 9 about which card came to the area 5 for placing cards face up on the gaming table 1. The dealer's first card is placed on the table face up and the dealer's second card is placed on the table face down. Information data processing system 18 totals values of the first two cards obtained by each player as appropriate depending whether successive-parallel, parallel-successive or parallel-parallel dealing is performed and corresponding resulting sums appear in the zones "total" for displaying information about the game run of the game control units 12. Having received two cards each player makes decision about the next step in the game. A player may order more cards, double down or split. In two latter cases the electronic data processing system 18 will automatically place appropriate bets and reduce the player's credit accordingly. If the value of the dealer's first card is 11 zones "insurance-yes,no" become activated on the players' game control units 12 and players can buy insurance. A player communicates his decision to the dealer by touching appropriate zone of the game control unit 12 : zone "additional card", zone "split", zone "double down" or zone "insurance-yes,no". If a player does not wish any more cards he touches zone "stand" of the game control unit 12. The size of the insurance bet usually equals half of the initial bet of the player and a player may choose insurance option to protect his initial bet against the dealer's win. If the dealer's hand is "Black Jack", the player wins double his insurance bet. If the dealer does not obtain "Black Jack" the player looses his insurance game but participates in the main game as usual on his initial bet. Information about players' decisions goes to the electronic data processing system 18. From electronic data processing system 18 information about players' decisions is transmitted via collective command formation unit 16 for transmitting joint command of the players to the dealer to the dealer's zone for displaying information about the game run. The dealer performs successive-parallel deal in the variant 1, parallel-successive deal in the variant 2 and parallel-parallel deal in the variant 3.

If a player wishes to leave the game at the end of a round he touches zone "sell credit" on the player's bet control unit 11. Electronic data processing system 18 performs final calculations and produces information about the sum due to the player. All information obtained by electronic data processing system 18 of t6he computer 17 about the dealer's card values and each of the player's card values, bets placed and the game run is displayed on the computer processed data visualisation device 20.

Information which comes to the electronic data processing system 18 from objects' presence on the table recognition unit 10 of the monitoring system of the game run 9, player's bet control units 11, game control units 12 also is sent to the information storage system 19. If required all data about any stage of the game or the whole game can be obtained from the information storage system 19.

At every stage of the game timers 21 restricting time available to the players for decision making installed in the player's bet control units 11 shut out a particular player's bet control unit 11 if that player takes too long to make a decision while placing a bet and the game continues without the player taking part. Timers 22 restricting time available to the players for decision making installed in the game control units 12 shut out a particular player's game control unit 12 if that player takes too long to make decision about the next step in the game and it will be treated as the player decided to stand.

As seen from above the claimed gaming equipment ensures increased dynamics of the game by reducing time per round of play, requiring fewer cards to be dealt per round of play, increasing the number of players participating in a round of play, combining games played by different rules in the same round of play, which allows to make the game more appealing for the players as well as for the house.

In the claimed gaming equipment for card games in particular for the game of Black Jack gaming table 1 with cloth 2 provided with markings designating players' sectors 3 and dealer's sector 4 as well as areas for placing cards face up,
card shoe 6 equipped with optical electronic detector of playing cards' movement 7,
card imprint value registration and recognition unit 6 (cards are drawn from the card shoe 6 face down),
objects' presence on the table recognition unit 10 of the monitoring system of the game run 9,
player's bet control units 11 and game control units 12 positioned in each player's sector,
credit control unit 13 and players' commands visualisation unit 14 positioned in the dealer's sector,
computer 17,
electronic data processing system 18,
information storage system 19,
computer processed data visualisation device 20
are realized in the same way as in the gaming equipment known from the prototype or any other standard gaming tables, card shoes, means for recognition and registration of the values of the cards drawn from the card shoe face down and means for recognition of objects' presence on the table (including recognition of values of cards present on the gaming table face up or face down, or cards present in the card shoe when values of one or more cards are determined before they are drawn from the card shoe), computers and electronic data processing systems known in the given field of technology can be used.

Player's bet control units 11, game control units 12, credit control unit 13 and players' commands visualisation unit 14 can be realized in the form of sensory displays each of which contains, for example liquid-crystalline active colour matrix made on the basis of thin film transistors (TFT) and special touch sensitive panel (see magazine "Computer review" No 11, 22-28 March 2000).

Automated credit control units 13 positioned on the additional automated tables can be realized, for example, on the basis of technology known from USA patent No6729985.

Parallel information transmission unit 15 transmitting information about value of card drawn by the dealer from the card shoe 6 to the game control units 12 of every player who is entitled to obtain cards can be realized as logical digital finite automaton on the basis of family 8051 processor manufactured by Atmel (see catalogue of DigiKey, 2004,Part No. AT 89C51 RC-24PI-ND) which, if a drawn card is classified by the electronic data processing system 18 as common for all players, simultaneously transmits information to the game control unit 12 of every player who is entitled to obtain cards. Collective command formation unit 16 for transmitting joint command of the players to the dealer can be realized as logical digital finite automaton on the basis of family 8051 processor manufactured by by Atmel (see catalogue of DigiKey, 2004,Part No. AT 89C51 RC-24PI-ND).

The claimed method of game in particular the game of Black Jack can be applied gaming equipment with incorporated random number generators such as slot machines, video slot machines and also can be used in computer games performed on computers connected into a network. Automated gaming table can be any gaming terminal connected to the electronic data processing system 18 as described in the present invention including Internet channels.

## Claims

1. Method of playing card game, in particular the game of Black Jack in which
- dealer shuffles a deck(s) of playing cards before the beginning of the game and places the said cards in the card shoe face down;
- all players at the gaming table place compulsory bets for the game of Black Jack;
- the dealer draws cards for each player and himself;
- each player makes decision in accordance with the rules of Black Jack - stand, request another card, double down, split, - until all players have lost right to obtain more cards;
- values of the first two cards and all additional cards, received by each player, are added up in accordance with the rules of Black Jack;
- the dealer stands or draws more cards for himself in accordance with the rules of Black Jack;
- values of the cards, received by the dealer, are added up;
- the dealer plays with each player in turn, comparing the player's hand and the dealer's hand;
- if the total value of a player's hand is higher than the total value of the dealer's hand, the player is paid the win in accordance
with the rules of Black Jack; if the total value of a player's hand is lower than the total value of the dealers hand, the player's bet goes to the bank; if the total value of a player's hand draws with the total value of the dealer's hand, it is push, the player retains his bet;
which **differs** in that
- after the dealer completed distribution of the first two cards to each of the players and himself, the players make decisions to stand, request another card, double down or split simultaneously;
- after all the players, who have right to stand, request another card, double down or split, made their decisions to stand, request another card, double down or split, and at least one player decided to request another card, double down or split, the dealer draws a card from the card shoe, the said card is common for all the players.

2. Method of playing card game, in particular the game of Black Jack, in which
- dealer shuffles a deck(s) of playing cards before the beginning of the game and places the said cards in the card shoe face down;
- all players at the gaming table place compulsory bets for the game of Black Jack;
- the dealer draws cards for players and himself;
- each player makes decision in accordance with the rules of Black Jack - stand, request another card, double down, split, - until all players lost right to obtain another card;
- values of the first two cards and all additional cards, received by each player, are added up in accordance with the rules of Black Jack;
- the dealer stands or draws more cards for himself in accordance with the rules of Black Jack;
- values of the cards, received by the dealer, are added up;
- the dealer plays with each player in turn, comparing the player's hand and the dealer's hand;
- if the total value of a player's hand is higher than the total value of the dealer's hand, the player is paid the win in accordance
with the rules of Black Jack; if the total value of a player's hand is lower than the total value of the dealers hand, the player's bet goes to the bank; if the total value of a player's hand draws with the total value of the dealer's hand, it is push, the player retains his bet;
which **differs** in that
- the first and the third cards, drawn by the dealer from the card shoe after the players placed their bets, are common for all players;
- values of the said first and third cards are added up and the total value is common for all the players-,
- each player in turn makes decision about next steps in the game;
- the dealer plays with each player in turn, drawing more cards for each player individually if the player's decision requires the dealer to do so;
- for each player the said total value of the said first and the said third cards drawn by the dealer from the card shoe, the said total value being common for all the players, is added up to the values of individually obtained cards in accordance with the rules of Black Jack.

3. Method of playing card game, in particular the game of Black Jack, in which
- dealer shuffles a deck(s) of playing cards before the beginning of the game and places the said cards in the card shoe face down;
- all players at the gaming table place compulsory bets for the game of Black Jack;
- any of the players can place additional bet if wishes to do so;
- the dealer draws cards for players and himself;
- each player makes decision in accordance with the rules of Black Jack - stand, request another card, double down, split, - until all players have lost right to obtain another card;
- values of the first two cards and all additional cards, received by each player, are added up in accordance with the rules of Black Jack;
- the dealer stands or draws more cards for himself in accordance with the rules of Black Jack;
- values of the cards, received by the dealer, are added up;
- the dealer plays with each player in turn, comparing the player's hand and the dealer's hand;
- if the total value of a player's hand is higher than the total value of the dealer's hand, the player is paid the win in accordance
with the rules of Black Jack; if the total value of a player's hand is lower than the total value of the dealers hand, the player's bet goes to the bank; if the total value of a player's hand draws with the total value of the dealer's hand, is push, the player retains his bet;
the said method differs in that
- the first and the third cards, drawn by the dealer from the cards shoe after the players placed their bets, are common for all the players;
- values of the said first and third cards are added up and the total value is common for all players;
- all players who have right to receive another card in accordance with the rules of Black Jack simultaneously make decisions about their next steps in the game;
- after all players, who have the right to stand, request another card, double down or split in accordance with the rules of Black Jack, made their decisions and at least one player decided to request another card, double down or split, the dealer draws a card from the card shoe, the said card is common for all the players, who's decision requires additional card;
- for each player the values of the first and third cards drawn by the dealer from the card shoe and values of all following cards, requested by the player are added up in accordance with the rules of black Jack.

4. Method of playing card game, in particular the game of Black Jack, as described in claim 1, 3, which differs in that
- every consecutive card, drawn by the dealer from the card shoe after all players made decisions about their next steps in the game, is common for all players who made decision to request another card, double down or split;
- every card, drawn by the dealer from the card shoe after all players made decisions about their next steps in the game, will be counted as the dealer's hand next card, provided that the total value of the dealer's hand does not exceed 17, for all the players, who made decisions to stand.

5. Method of playing card game as described in claims 3 which differs in that a player can place additional bet for the game of Baccarat, the said game is played as follows:
- the players' initial two cards hand and the dealer's initial two cards hand for Baccarat are as in the main game of Black Jack;
- if in accordance with the rules of Baccarat a third card is required for the players' hand or the dealer's hand, the said required third card will be the fifth card, drawn by the dealer from the card shoe;
- if in accordance with the rules of Baccarat a third card is required for the players' hand and a third card is required for the dealer's hand, it will be respectively the fifth and the sixth cards drawn by the dealer from the card shoe.

6. Method of playing card games as described in claims 3,4,5 which differs in that the time allocated to the players for decision making is limited.

7. Gaming equipment for playing card game, in particular the game of Black Jack, comprising:
- gaming table with cloth provided with markings, designating player zones, dealer zone and areas for placing playing cards face up;
- card shoe for storing and distributing cards, cards are drawn from the card shoe face up, the said card shoe is equipped with optical electronic sensor for detecting cards' movements and card value imprint recognition and registration unit for recognition and registration of the values of cards drawn from the card shoe;
- monitoring system of the game run, provided with object's presence on the table recognition unit;
- player bet control units, provided with zones for entering operating commands and zone for displaying information about the game run, the said player bet control units are positioned correspondingly in each player zone;
- player's game control units, provided with zones for entering operating commands and zone for displaying information about the game run, the said player's game control units are positioned correspondingly in each player zone;
- credit control unit, provided with zones for entering operating commands, the said credit control unit is positioned in the dealer zone;
- players commands visualization unit, provided with zone for entering operating commands and zone for displaying information about the game run, the said players commands visualization unit is positioned in the dealer zone;
- computer, connected to the functional units by means of wire or wireless communications, the said computer is equipped with programmed in accordance with the game rules electronic data processing system;
- computer processed data visualization device;
- information storage system,
the inputs of the electronic data processing system are connected respectively to the outputs of :
- card value imprint recognition and registration unit for recognition and registration of the values of cards drawn from the card shoe face down,
- object's presence on the table recognition unit;
- computer,
- player bet control units,
- credit control unit;
inputs of the computer are connected correspondingly to the outputs of the electronic data processing system and information storage system;
inputs of the player bet control units are connected correspondingly to the output of the electronic data processing system;
input of the credit control unit is connected correspondingly to the output of the electronic data processing system;
input of the players commands visualization unit is connected correspondingly to the output of the electronic data processing system;
input of the information storage system is connected correspondingly to the output of the computer;
input of the computer processed data visualization device is connected correspondingly to the output of the computer;
the said gaming equipment differs in that it additionally contains
- parallel transmission of information unit for transmitting information about value of the card drawn by the dealer from the card shoe to the player game control units of all players, who have right to obtain the said card;
- collective command formation unit for formation of collective command of the players to the dealer;
input of the parallel transmission of information unit is connected correspondingly to the output of the electronic data processing system;
output of the parallel transmission of information unit is connected correspondingly to the inputs of each of the player game control units;
input of the collective command formation unit is connected correspondingly to the outputs of each of the player game control units;
output of the collective command formation unit is connected correspondingly to the input of the electronic data processing system;

8. Gaming equipment for playing card game as in claim 7, which **differs** in that it additionally comprises timers limiting length of time available to the players for making a decision, the said timers are installed in player bet control units and player game control units.

9. Gaming equipment for playing card game as in claims 7 and 8, which **differs** s in that it additionally comprises one or more automated gaming tables where each player's sector is equipped with:
player's bet control unit with zones for entering operating commands and zone for displaying information about the game run, game control unit with zones for entering operating commands and zone for displaying information about the game run, automated credit control units with zones for entering operating commands and zone for displaying information about the game run, and
the outputs of the player bet control units, the game control units and automated credit control units installed on the automated tables are connected correspondingly to the inputs of the electronic data processing system, herein the outputs of the game control units are connected to the inputs of the electronic data processing system via collective command formation unit,
the inputs of the player bet control units, the game control units and automated credit control units are connected correspondingly to the outputs of the electronic data processing system, herein the inputs of the game control units are connected to the outputs of the electronic data processing system via parallel transmission of information unit.
